# EUROPÄISCHE PATENTSCHRIFT

(11) **EP 4 403 339 B1**
(45) Veröffentlichungstag und Bekanntmachung des Hinweises auf die Patenterteilung: **01.07.2026**
(21) Anmeldenummer: 24152837.1
(22) Anmeldetag: 19.01.2024
(51) Int. Cl.: B29D 99/00, B29L 31/30, B32B 15/08, B32B 15/18, B32B 15/20, B32B 27/12, B32B 27/34, B32B 27/38, B32B 5/02, B32B 7/10

(54) **VERFAHREN ZUR HERSTELLUNG EINES HYBRIDBAUTEILS**
METHOD FOR PRODUCING A HYBRID COMPONENT
PROCÉDÉ DE FABRICATION D'UN COMPOSANT HYBRIDE

(30) Priorität: 19.01.2023 DE 102023101310
(43) Veröffentlichungstag der Anmeldung: 24.07.2024
(73) Patentinhaber: Deutsches Zentrum für Luft- und Raumfahrt e.V., 53227 Bonn-Oberkassel (DE)
(72) Erfinder: Regé, Matteo, 38114 Braunschweig (DE); Titze, Maik, 30419 Hannover (DE); Kühnast, Fabian, 38104 Braunschweig (DE)
(74) Vertreter: Gramm, Lins & Partner Patent- und Rechtsanwälte PartGmbB

(56) Entgegenhaltungen:
- DE-A1- 102013 114 829
- DE-A1- 102018 121 336
- JP-A- S63 295 692
- US-A1- 2015 165 746
- US-A1- 2020 406 600
- AGEORGES C ET AL: "Advances in fusion bonding techniques for joining thermoplastic matrix composites: a review", COMPOSITES PART A, ELSEVIER, AMSTERDAM, NL, vol. 32, no. 6, 1 June 2001 (2001-06-01), pages 839 - 857, XP004232559, ISSN: 1359-835X, DOI: 10.1016/S1359-835X(00)00166-4

## Beschreibung

Die Erfindung betrifft ein Verfahren zur Herstellung eines Hybridbauteils, das aus mindestens zwei voneinander verschiedenen Werkstoffen hergestellt wird.

Die additive Fertigung, auch bekannt als 3D-Druck, ist ein aufstrebendes Fertigungsverfahren, welches zunehmend bei der Herstellung von Komponenten für Anwendungen im Transportsektor, insbesondere in der Luft- und Raumfahrt, eingesetzt wird. Im Vergleich zu konventionellen Herstellungsverfahren bieten die Technologien der additiven Fertigung ein enormes Potenzial für die Massenproduktion, Kostenreduzierung und Vereinfachung der Lieferkette, da sie die Möglichkeit bieten, Teile bei Bedarf vor Ort herzustellen, ohne hierfür kostenintensive Lagerstädten bereitzustellen.

Ein Nachteil der additiven Fertigung sind die im Vergleich zu konventionellen Fertigungstechniken erheblich langsameren Produktionsraten, was wirtschaftlich sinnvolle Anwendungen von additiv gefertigten Teilen erschwert. Des Weiteren lassen sich mit additiven Fertigungsverfahren in der Regel nur Bauteile herstellen, die integral aus einem einzigen Werkstoff hergestellt sind. Hybridbauteile, die aus zwei oder mehr voneinander verschiedenen Werkstoffen hergestellt sind, lassen sich mit additiven Fertigungsverfahren nur unzureichend fertigen.

Solche Hybridbauteile bestehen oft aus einem Grundsubstrat, an das mindestens ein Funktionselement angeordnet ist. Diese Funktionselemente weisen dabei einen Werkstoff auf, bzw. bestehen aus einem solchen Werkstoff, der von dem Werkstoff des Grundsubstrates verschieden ist. Hierdurch lassen sich Bauteile fertigen, bei denen die Werkstoffauswahl an die jeweilige Funktion des Funktionselementes angepasst ist und die somit entweder hinsichtlich der Stabilität/Steifigkeit und/oder des Gewichtes optimiert sind oder zusätzliche Funktionen wie elektrische Leitfähigkeit, definierte Wärmeleitfähigkeit oder auch sensorische Eigenschaften aufweisen.

Aus der US 2016/0325380 A1 ist ein Verfahren zur Herstellung eines Bauteils bekannt, das aus mehreren Werkstoffen zusammengesetzt wird. Dabei wird ein erstes Teilbauteil aus einem ersten Werkstoff bereitgestellt, auf das ein zweites Teilbauteil aus einem zweiten Werkstoff appliziert wird. Nachteilig hierbei ist, dass nur Werkstoff verwendet werden können, die chemisch kompatibel sind, um eine belastbare Verbindung zwischen den Teilbauteilen zu gewährleisten. Darüber hinaus führen bei Anwendungen, bei denen das endgültige Bauteil Temperaturschwankungen ausgesetzt ist, die voneinander verschiedenen Wärmeausdehnungskoeffizienten der Werkstoffe zu unterschiedlichen Ausdehnungen und Kontraktionen, die zu Spannungen führen, die möglicherweise das Versagen der Verbindung zur Folge haben.

Die DE 10 2018 121 336 A1 offenbart die Herstellung eines Faserverbundbauteils mit einem Funktionselement, dass zunächst auf einem folienartigen Haftvermittler aufgedruckt wird. Anschließend wird dieser folienartiger Haftvermittler mit dem Funktionselement auf eine Faserpreform (also ein nicht ausgehärtetes Bauteil) angeordnet und anschließend das Matrixmaterial in dem Fasermaterial der Faserpreform ausgehärtet.

Die US 2025 / 0165746 A1 offenbart das Verkleben zweier Komponenten mithilfe einer thermoplastischen Klebschicht ohne die Verwendung von entsprechenden Funktionsschichten.

Die DE 10 2013 114 829 A1 offenbart ein Verfahren zur Herstellung eines Hybridbauteils, bei dem an ein Duroplastbauteil ein Thermoplastbauteil angebunden werden soll. Hierfür wird eine unter anderem mehrschichtige Funktionsschicht auf das Duroplastbauteil aufgebracht, die zumindest einen thermoplastischen Werkstoff aufweist, umso an diese Funktionsschicht das Thermoplastbauteil anbringen zu können.

Die US 2020 / 0406600 A1 offenbart die Verbindung zweier thermoplastischer Bauteile mithilfe einer Klebschicht.

Die JP S63 295692 A offenbart schließlich die Anordnung eines antikorrosiven Materials aus einem Polymermaterial auf einer Oberfläche.

Vor diesem Hintergrund ist es Aufgabe der vorliegenden Erfindung ein verbessertes Verfahren anzugeben, mit dem Hybridbauteile aus verschiedenen Werkstoffen mit einer belastbaren Verbindung hergestellt werden können.

Die Aufgabe wird mit dem Verfahren zur Herstellung eines Hybridbauteils gemäß Anspruch 1 erfindungsgemäß gelöst. Vorteilhafte Ausgestaltungen der Erfindung finden sich dann in den entsprechenden Unteransprüchen.

Gemäß Anspruch 1 wird ein Verfahren zur Herstellung eines Hybridbauteils vorgeschlagen, welches aus mindestens zwei voneinander verschiedenen Werkstoffen hergestellt wird. Bei einem der Werkstoffe handelt es sich dabei um ein thermoplastisches Material bzw. eine thermoplastischen Werkstoff, während der andere Werkstoff ein hiervon verschiedener Werkstoff, beispielsweise ein duroplastischer Werkstoff ist. Bei dem anderen Werkstoff handelt es sich zumindest nicht um eine thermoplastischen Werkstoff, sodass das Hybridbauteils aus einem thermoplastischen Werkstoff und aus einem Werkstoff, der kein thermoplastischer Werkstoff ist, hergestellt wird. Dabei können diese duroplastischen und/oder thermoplastischen Werkstoffe mit Füllstoffen versehen sein, bspw. mit Kurz- oder Endlosfasern, die bspw. aus Glas, Kohlefaser, Aramid, Basalt oder anderen Materialien (auch Nanopartikeln).

Das erfindungsgemäße Verfahren umfasst dabei die folgenden Schritte:
- Bereitstellen eines Substrates aus einem (nicht-thermoplastischen) Substratwerkstoff, auf das wenigstens ein Funktionselement in einem Funktionsbereich des Substrates aufgebracht werden soll,
- wobei der Substratwerkstoff ein Faserverbundwerkstoff aufweisend ein Fasermaterial und ein das Fasermaterial einbettendes Matrixmaterial ist,
- Erstellen einer ersten Funktionsschicht aus einem duroplastischen Harzsystem auf das bereits vollständig konsolidierte Substrat zumindest innerhalb des Funktionsbereiches des Substrates,
- Aufbringen wenigstens einer zweiten Funktionsschicht aus einem thermoplastischen Werkstoff auf die erste Funktionsschicht,
- wobei das duroplastische Harzsystem und der thermoplastische Werkstoff so gewählt sind, dass beide nach dem Konsolidieren eine stoffschlüssige Verbindung eingehen, und
- Aufbringen eines von dem Substratwerkstoff verschiedenen thermoplastischen Werkstoffes auf diese so auf dem Substrat hergestellten zweiten Funktionsschicht, um das Funktionselement auf dem Substrat herzustellen.

Demnach wird zunächst ein Substrat aus einem Substratwerkstoff bereitgestellt, auf dem wenigstens ein Funktionselement in einem Funktionsbereich des Substrates aufgebracht werden soll. Das Funktionselement soll dabei aus einem thermoplastischen Werkstoff hergestellt werden, während das Substrat aus einem anderen Substratwerkstoff, der kein thermoplastischer Werkstoff ist, hergestellt ist. Das Funktionselement wird dabei in einer besonders bevorzugten Ausführungsform in einem additiven Fertigungsverfahren direkt auf der zweiten Funktionsschicht durch Aufbringen des thermoplastischen Werkstoffes hergestellt, bspw. in Form eines 3D-Drucks.

Um das Aufbringen des Funktionselementes aus dem thermoplastischen Werkstoff mit einer prozesssicheren und verlässlichen Verbindung zu gewährleisten, wird zunächst eine erste Funktionsschicht aus einem duroplastischen Harzsystem auf das Substrat innerhalb des Funktionsbereiches aufgebracht. Es ist hierbei von Vorteil, wenn das duroplastische Harzsystem kompatibel mit dem Substratwerkstoff in der Art ist, dass das duroplastische Harzsystem und der Substratwerkstoff eine stoffschlüssige Verbindung eingehen. D. h., im besten Fall geht das duroplastische Harzsystem mit dem Substratwerkstoff eine chemische Verbindung ein, sodass eine feste und sichere Verbindung zwischen dem Substrat und der ersten Funktionsschicht entsteht.

Auf diese erste Funktionsschicht wird nun in einem zweiten Schritt eine zweite Funktionsschicht aus einem thermoplastischen Werkstoff aufgebracht, wobei das duroplastische Harzsystem und der thermoplastische Werkstoff derart gewählt sind, dass beide nach dem Aushärten eine stoffschlüssige Verbindung eingehen. D. h., die erste Funktionsschicht und zweite Funktionsschicht bildet eine chemische Verbindung, beispielsweise in Form einer Diffusionsverbindung und/oder durch kovalente Bindungen zwischen duroplastischem Harzsystem und thermoplastischem Werkstoff, umso einen Funktionsverbund zwischen der ersten Funktionsschichtung der zweiten Funktionsschicht herzustellen.

Auf diese so auf dem Substrat hergestellte zweite Funktionsschicht aus einem thermoplastischen Werkstoff kann nun das Funktionselement, welches ebenfalls aus einem thermoplastischen Werkstoff hergestellt ist bzw. aus einem solchen Werkstoff besteht oder einen solchen Werkstoff aufweist, aufgebracht und stoffschlüssig mit der zweiten Funktionsschicht verbunden werden.

Mithilfe der vorliegenden Erfindung wird es daher möglich, auf ein bereitgestelltes Substrat ein thermoplastisches Funktionselement fest und sicher anzuordnen, um so ein entsprechendes Hybridbauteil herzustellen. Durch die erste und zweite Funktionsschicht wird dabei sichergestellt, dass das thermoplastische Funktionselement an dem Substrat auch dann fest und sicher angeordnet werden kann, wenn der Substratwerkstoff des Substrates nicht aus einem thermoplastischen Werkstoff gebildet ist.

Unter einer stoffschlüssigen Verbindung zwischen der ersten Funktionsschicht und der zweiten Funktionsschicht wird hierbei insbesondere verstanden, dass das duroplastische Harzsystem der ersten Funktionsschicht und der thermoplastische Werkstoff der zweiten Funktionsschicht eine chemische Verbindung, beispielsweise über eine Diffusionsverbindung und/oder durch kovalente Bindungen, eingehen. Sowohl das duroplastische Harzsystem als auch der thermoplastische Werkstoff werden demnach so gewählt, dass zwischen den beiden Werkstoffen eine solche stoffschlüssige Verbindung möglich ist.

Für die thermoplastische Funktionsschicht eignen sich beispielsweise Werkstoffe, wie PEI (Polyetherimide), PES (Polyethersulfon), PSU (Polysulfon) oder PA (Polyamid), da diese eine gute chemische Kompatibilität mit den Expoxidharzmolekülen zeigen. Es hat sich gezeigt, dass viele thermoplastische Werkstoffe mit diesen Systemen kompatibel sind, sodass das nachträglich aufgebrachte thermoplastische Funktionselement nicht zwangsläufig auch ein PEI sein muss, sondern auch ein Werkstoff aus der Polyaryletherketon-Gruppe (PAEK, bspw. PEEK) (Polyetheretherketon) oder Thermoplasten anderer Materialgruppen sein kann.

Es wird daher möglich, Funktionselemente aus einem thermoplastischen Werkstoff auch dann an einem Substrat anzuordnen, wenn eine direkte Anhaftung aufgrund des mit dem thermoplastischen Werkstoff inkompatiblen Substratwerkstoffes nicht möglich ist. Durch das Aufbringen der ersten und zweiten Funktionsschicht und dem Herstellen eines entsprechenden Funktionsverbundes können diese Brücken geschlossen werden.

Unter dem Konsolidieren im Sinne der vorliegenden Erfindung wird bei duroplastischen Werkstoffen insbesondere das Aushärten der Matrix verstanden. Das bedeutet insbesondere, dass echte Kettenverbindungen zwischen den Molekülen entstehen bzw. neu aufgebaut werden (vernetzen). Bei thermoplastischen Werkstoffen wird unter dem Konsolidieren insbesondere das Erhärten bzw. Erstarren des Werkstoffes verstanden, welches bei Wärmezufuhr aufschmilzt und beim Abkühlen wieder erstarrt.

Gemäß einer Ausführungsform ist vorgesehen, dass vor dem Aufbringen des thermoplastischen Werkstoffes zur Herstellung des thermoplastischen Funktionselementes die erste und zweite Funktionsschicht konsolidiert wird.

Durch das Aushärten der ersten und zweiten Funktionsschicht in einem bevorzugt gemeinsamen Aushärtungsprozesses (Co-Curing) kann sichergestellt werden, dass die beiden Werkstoffe eine stoffschlüssige Verbindung, beispielsweise in Form einer chemischen Verbindung, eingehen und so eine feste und stabile Verbindung etablieren.

Gemäß einer Ausführungsform ist vorgesehen, dass das duroplastische Harzsystem ein Epoxid-Harzsystem ist und/oder dass der thermoplastische Werkstoff ein PEI, PSU, PES oder PA ist.

Gemäß einer Ausführungsform ist vorgesehen, dass der thermoplastische Werkstoff in Form einer thermoplastischen Folie auf die erste Funktionsschicht aufgebracht wird.

Erfindungsgemäß ist vorgesehen, dass der Substratwerkstoff ein duroplastischer Kunststoff ist bzw. aus einem solchen besteht oder einen solchen aufweist.

Erfindungsgemäß ist vorgesehen, dass der Substratwerkstoff ein Faserverbundwerkstoff aufweisend ein Fasermaterial und ein das Fasermaterial einbettendes Matrixmaterial ist. Ein solcher Faserverbundwerkstoff kann dabei beispielsweise ein CFK oder GFK, mit einem duroplastischen Kunststoff als Matrixmaterial, sein.

Erfindungsgemäß ist vorgesehen, dass das Matrixmaterial ein duroplastisches Matrixmaterial ist. Insbesondere bei einem duroplastischen Matrixmaterial entsteht durch die vorliegende Erfindung der Vorteil, dass an das Substrat aus dem duroplastischen Werkstoff ein Funktionselement aus einem thermoplastischen Werkstoff fest und sicher angeordnet werden kann, dadurch den gebildeten Funktionsverbund aus der ersten Funktionsschicht und der zweiten Funktionsschicht eine feste und sichere Anhaftung gewährleistet.

In einer weiteren Ausführungsform ist vorgesehen, dass das Substrat aus einem Faserverbundwerkstoff hergestellt ist und bereits vollständig konsolidiert ist, wobei das Matrixmaterial des Faserverbundwerkstoffes eine duromere Polymermatrix ist und wobei die duroplastische Funktionsschicht nachträglich aufgebracht wird und über verbliebene reaktive Gruppen des Substrates oder über ein Anlösen der Oberfläche - ggf. mit einem Haftvermittler - angebunden wird, wobei darauf dann die thermoplastische Funktionsschicht aufgebracht wird.

In dieser Ausführungsform geht es insbesondere um die Reparatur von bestehenden Strukturen, z.B. Frontschürze eines Zuges. Im Schadensbereich wird eine weitere Epoxidharzschicht aufgebracht und gemeinsam mit einer Thermoplastfolie ausgehärtet, so dass der Funktionsbereich überdruckbar wird. Die Anbindung der ersten Funktionsschicht an das bereits ausgehärtete Substrat muss über ein nachträgliches An-Vernetzen erfolgen. Meistens muss hierfür das Substrat angelöst werden, um reaktive Gruppen zu schaffen. Das kann entweder durch das Harz selbst geschehen oder durch einen zusätzlichen Haftvermittler.

Gemäß einer Ausführungsform ist vorgesehen, dass die erste Funktionsschicht derart aufgetragen wird, dass die Materialdicke der ersten Funktionsschicht weniger als 1 mm beträgt.

Gemäß einer Ausführungsform ist vorgesehen, dass die zweite Funktionsschicht derart aufgetragen wird, dass die Materialdicke weniger als 10 mm beträgt.

Gemäß einer Ausführungsform ist vorgesehen, dass das Funktionselement auf die zweite Funktionsschicht durch Drucken oder Sprühen des thermoplastischen Werkstoffes hergestellt wird.

Dabei wird das Funktionselement in einem zweiten Fertigungsverfahren (bspw. 3D-Druck, Overmolding, Heißpressen, etc...) aus dem thermoplastischen Material direkt auf dem Substrat hergestellt, um das Hybridbauteils zu erzeugen.

Denkbar ist allerdings auch, dass das Funktionselement hinsichtlich seiner grundsätzlichen Vormundgeometrie separat hergestellt wird und in einem anschließenden Fügeprozess mit der zweiten Funktionsschicht verbunden wird.

Mit der vorliegenden Erfindung wird somit eine besonders gute Schichtanhaftung im Vergleich zu anderen Möglichkeiten, wie beispielsweise Kleben, erreicht, indem zwischen der ersten Funktionsschicht und der zweiten Funktionsschicht eine Interdiffusion zwischen der duroplastischen Epoxidharzschicht und der thermoplastischen Funktionsschicht entsteht, wobei auf die thermoplastische Funktionsschicht nachträglich ein Thermoplast zum Erzeugen oder Anordnen des Funktionselementes aufbringbar ist.

Die Erfindung wird anhand der beigefügten Figuren beispielhaft näher erläutert. Es zeigen:
- Figur 1: perspektivische Darstellung eines Hybridbauteils;
- Figur 2: schematische Darstellung der Herstellung des Substrates mit dem Funktionsverbund.

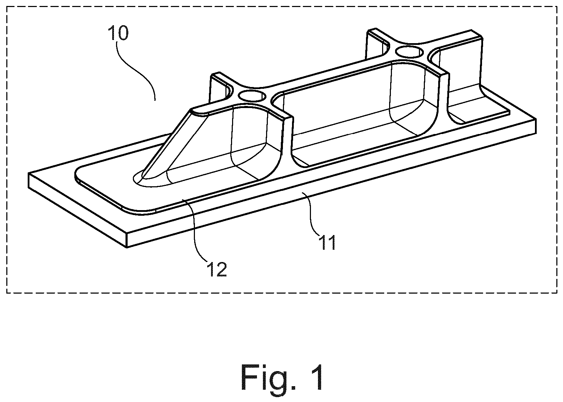

Figur 1 zeigt in einer perspektivischen Darstellung ein Hybridbauteil 10, welches ein Substrat 11 und ein an dem Substrat 11 angeordnetes Funktionselement 12 umfasst. Bei dem Beispiel in Figur 1 handelt es sich bei dem Funktionselement 12 um einen Stringer zur Versteifung des Substrates 11, welches aus einer Hybrid-Metall-Polymer-Platte gebildet ist.

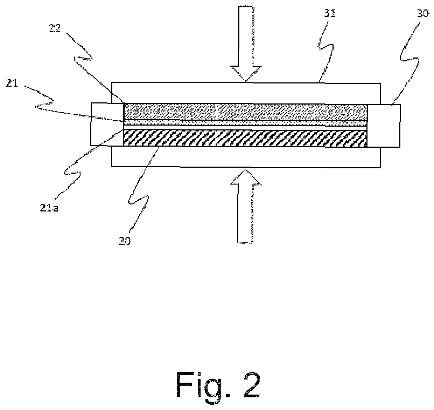

Figur 2 zeigt in einem Ausführungsbeispiel, wie ein Substrat 20 mit dem Funktionsverbund aus der ersten Funktionsschicht 21 und der zweiten Funktionsschicht 22 hergestellt werden kann.

Im Ausführungsbeispiel der Figur 2 kann das Substrat 20 beispielsweise eine Titanplatte sein. Denkbar ist aber auch, dass das Substrat 20 aus einem Faserverbundwerkstoff aufweisend ein Fasermaterial und ein das Fasermaterial einbettendes Matrixmaterial ist, wobei das Matrixmaterial des Substrates 20 bereits ausgehärtet sein kann oder zusammen in einem Prozessschritt mit der ersten Funktionsschicht 21 und der zweiten Funktionsschicht 22 ausgehärtet wird.

In dem Bereich, in dem die Funktionsschichten zur Bildung des Funktionsverbundes auf das Substrat 20 aufgebracht werden sollen, wird zunächst eine eventuell bestehende Oxidschicht in diesem Bereich entfernt. Anschließend wird eine Grundierung 21a bzw. ein Haftvermittler aufgebracht, auf den dann anschließend die erste Funktionsschicht 21 in Form einer Folie eines duroplastischen (Epoxyd)-Harzsystems aufgebracht. Auf diese erste Funktionsschicht 21, die im Gegensatz zu der zweiten Funktionsschicht 22 eine deutlich geringere Dicke aufweist, wird nun die zweite Funktionsschicht 22 aufgebracht, die aus einem thermoplastischen Werkstoff besteht oder einen solchen aufweist.

An den Rändern werden Abstandselemente 30 angeordnet, wobei dieser so gebildete Aufbau dann in eine Heizpresse mit zwei parallelen Platten 31 eingebracht wird und unter Druck und Hitze ausgehärtet wird.

Nach dem Konsolidieren weist das Substrat 20 den gewünschten Funktionsverbund aus der ersten und zweiten Funktionsschicht auf, wobei nun auf die zweite Funktionsschicht 22 aus einem thermoplastischen Werkstoff ein entsprechendes Funktionselement aus einem Thermoplast aufgebracht, hergestellt oder angeordnet werden kann.

Damit wird es möglich, Funktionselemente aus einem thermoplastischen Material auf Substrate aufzubringen, die eben keine Thermoplasten sind und somit normalerweise eine sehr schlechter Anhaftung hätten.

### Bezugszeichenliste

- 10: Hybridbauteil
- 11: Substrat
- 12: Funktionselement
- 20: Substrat
- 21a: Grundierung
- 21: erste Funktionsschicht/duroplastisches Harzsystem
- 22: zweite Funktionsschicht/thermoplastische Werkstoff
- 30: Abstandselemente
- 31: Heizpresse

## Patentansprüche

1. Verfahren zur Herstellung eines Hybridbauteils (10), das aus mindestens zwei voneinander verschiedenen Werkstoffen hergestellt wird, wobei das Verfahren die folgenden Schritte umfasst:
- Bereitstellen eines Substrates (11,20) aus einem Substratwerkstoff, auf das wenigstens ein Funktionselement (12) in einem Funktionsbereich des Substrates (11,20) aufgebracht werden soll,
- wobei der Substratwerkstoff ein Faserverbundwerkstoff aufweisend ein Fasermaterial und ein das Fasermaterial einbettendes Matrixmaterial ist,
- Erstellen einer ersten Funktionsschicht (21) aus einem duroplastischen Harzsystem (21) auf das bereits vollständig konsolidierte Substrat (11,20) zumindest innerhalb des Funktionsbereiches des Substrates (11,20),
- Aufbringen wenigstens einer zweiten Funktionsschicht (22) aus einem thermoplastischen Werkstoff (22) auf die erste Funktionsschicht (21),
- wobei das duroplastische Harzsystem (21) und der thermoplastische Werkstoff (22) so gewählt sind, dass beide nach dem Konsolidieren eine stoffschlüssige Verbindung eingehen, und
- Aufbringen eines von dem Substratwerkstoff verschiedenen thermoplastischen Werkstoffes auf diese so auf dem Substrat (11,20) hergestellten zweiten Funktionsschicht (22), um das Funktionselement (12) auf dem Substrat (11,20) herzustellen.

2. Verfahren nach Anspruch 1, **dadurch gekennzeichnet, dass** vor dem Aufbringen des thermoplastischen Werkstoffes für das Funktionselement (12) die erste und zweite Funktionsschicht (22) konsolidiert wird.

3. Verfahren nach Anspruch 1 oder 2, **dadurch gekennzeichnet, dass** das duroplastische Harzsystem (21) ein Epoxid-Harzsystem ist und/oder dass der thermoplastische Werkstoff (22) ein PEI, PSU, PES oder PA ist.

4. Verfahren nach einem der vorhergehenden Ansprüche, **dadurch gekennzeichnet, dass** der thermoplastische Werkstoff der zweiten Funktionsschicht (22) in Form einer thermoplastischen Folie auf die erste Funktionsschicht (21) aufgebracht wird.

5. Verfahren nach einem der vorhergehenden Ansprüche, **dadurch gekennzeichnet, dass** das Substrat aus einem Faserverbundwerkstoff hergestellt ist und vollständig konsolidiert ist, wobei das Matrixmaterial des Faserverbundwerkstoffes eine duromere Polymermatrix ist und wobei die duroplastische Funktionsschicht nachträglich aufgebracht wird und über verbliebene reaktive Gruppen des Substrates oder über ein Anlösen der Oberfläche angebunden wird, wobei darauf dann die thermoplastische Funktionsschicht aufgebraucht wird.

6. Verfahren nach einem der vorhergehenden Ansprüche, **dadurch gekennzeichnet, dass** die erste Funktionsschicht (21) derart aufgetragen wird, dass die Materialdicke der ersten Funktionsschicht (21) weniger als 1 mm beträgt.

7. Verfahren nach einem der vorhergehenden Ansprüche, **dadurch gekennzeichnet, dass** die zweite Funktionsschicht (22) derart aufgetragen wird, dass die Materialdicke weniger als 10 mm beträgt.

8. Verfahren nach einem der vorhergehenden Ansprüche, **dadurch gekennzeichnet, dass** das Funktionselement (12) auf die zweite Funktionsschicht (22) durch Drucken, Aufspritzen, Pressen, Schweißen und/oder Sprühen des thermoplastischen Werkstoffes des Funktionselementes (12) hergestellt wird.

## Claims

1. A method for manufacturing a hybrid component (10) made from at least two different materials, wherein the method comprises the following steps:
- providing a substrate (11, 20) made of a substrate material, onto which at least one functional element (12) is to be applied in a functional region of the substrate (11, 20),
- wherein the substrate material is a fiber composite comprising a fiber material and a matrix material embedding the fiber material,
- forming a first functional layer (21) from a thermosetting resin system (21) on the already fully consolidated substrate (11, 20) at least within the functional region of the substrate (11, 20),
- applying at least a second functional layer (22) made of a thermoplastic material (22) to the first functional layer (21),
- wherein the thermosetting resin system (21) and the thermoplastic material (22) are selected such that both form a bond by interlocking of the materials after consolidation, and
- applying a thermoplastic material different from the substrate material to this second functional layer (22) thus produced on the substrate (11, 20) in order to produce the functional element (12) on the substrate (11, 20).

2. A method according to claim 1, **characterized in that** the first and second functional layers (22) are consolidated prior to applying the thermoplastic material for the functional element (12).

3. A method according to claim 1 or 2, **characterized in that** the thermosetting resin system (21) is an epoxy resin system and/or that the thermoplastic material (22) is a PEI, PSU, PES, or PA.

4. A method according to one of the preceding claims, **characterized in that** the thermoplastic material of the second functional layer (22) is applied to the first functional layer (21) in the form of a thermoplastic foil.

5. A method according to any of the preceding claims, **characterized in that** the substrate is made of a fiber-reinforced composite material and is fully consolidated, wherein the matrix material of the fiber-reinforced composite material is a thermosetting polymer matrix, and wherein the thermosetting functional layer is subsequently applied and bonded via remaining reactive groups of the substrate or via surface etching, whereupon the thermoplastic functional layer is then applied thereon.

6. A method according to one of the preceding claims, **characterized in that** the first functional layer (21) is applied such that the material thickness of the first functional layer (21) is less than 1 mm.

7. A method according to one of the preceding claims, **characterized in that** the second functional layer (22) is applied such that the material thickness is less than 10 mm.

8. A method according to any of the preceding claims, **characterized in that** the functional element (12) is formed on the second functional layer (22) by printing, injection molding, pressing, welding, and/or spraying the thermoplastic material of the functional element (12).

## Revendications

1. Procédé de fabrication d'un composant hybride (10) qui est fabriqué à partir d'au moins deux matériaux différents l'un de l'autre, ledit procédé comprenant les étapes suivantes consistant à :
- fournir un substrat (11, 20) constitué d'un matériau de substrat, sur lequel au moins un élément fonctionnel (12) doit être appliqué dans une zone fonctionnelle du substrat (11, 20),
- le matériau de substrat étant un matériau composite renforcé de fibres comprenant un matériau fibreux et un matériau matriciel enrobant le matériau fibreux,
- réaliser une première couche fonctionnelle (21), constituée d'un système de résine thermodurcissable (21), sur le substrat (11, 20) déjà entièrement consolidé, au moins à l'intérieur de la zone fonctionnelle du substrat (11, 20),
- appliquer au moins une deuxième couche fonctionnelle (22), constituée d'un matériau thermoplastique (22), sur la première couche fonctionnelle (21),
- le système de résine thermodurcissable (21) et le matériau thermoplastique (22) étant choisis de telle sorte qu'ils forment tous deux une liaison par coopération de matières, après consolidation, et
- appliquer un matériau thermoplastique, différent du matériau de substrat, sur cette deuxième couche fonctionnelle (22) ainsi réalisée sur le substrat (11, 20), afin de fabriquer l'élément fonctionnel (12) sur le substrat (11, 20).

2. Procédé selon la revendication 1,
**caractérisé en ce que**, avant l'application du matériau thermoplastique pour l'élément fonctionnel (12), les première et deuxième couches fonctionnelles (22) sont consolidées.

3. Procédé selon la revendication 1 ou 2,
**caractérisé en ce que** le système de résine thermodurcissable (21) est un système de résine époxy, et/ou **en ce que** le matériau thermoplastique (22) est un PEI, un PSU, un PES ou un PA.

4. Procédé selon l'une des revendications précédentes,
**caractérisé en ce que** le matériau thermoplastique de la deuxième couche fonctionnelle (22) est appliqué sous la forme d'un film thermoplastique sur la première couche fonctionnelle (21).

5. Procédé selon l'une des revendications précédentes,
**caractérisé en ce que** le substrat est fabriqué à partir d'un matériau composite renforcé de fibres et est entièrement consolidé, le matériau matriciel du matériau composite renforcé de fibres étant une matrice polymère duromère, et la couche fonctionnelle thermodurcissable étant appliquée ultérieurement et liée par l'intermédiaire de groupes réactifs résiduels du substrat ou par une dissolution de la surface, la couche fonctionnelle thermoplastique étant ensuite appliquée par-dessus.

6. Procédé selon l'une des revendications précédentes,
**caractérisé en ce que** la première couche fonctionnelle (21) est appliquée de telle sorte que l'épaisseur de matériau de la première couche fonctionnelle (21) soit inférieure à 1 mm.

7. Procédé selon l'une des revendications précédentes,
**caractérisé en ce que** la deuxième couche fonctionnelle (22) est appliquée de telle sorte que l'épaisseur de matériau soit inférieure à 10 mm.

8. Procédé selon l'une des revendications précédentes,
**caractérisé en ce que** l'élément fonctionnel (12) est fabriqué sur la deuxième couche fonctionnelle (22) par impression, projection, pressage, soudage et/ou pulvérisation du matériau thermoplastique de l'élément fonctionnel (12).
